# FASCICULE DE BREVET EUROPEEN

(11) **EP 3 074 295 B1**
(45) Date de publication et mention de la délivrance du brevet: **08.11.2017**
(21) Numéro de dépôt: 14805575.9
(22) Date de dépôt: 27.11.2014
(51) Int. Cl.: B62D 1/183, B62D 21/18

(54) **KART A COLONNE DE DIRECTION BASCULANTE**
GOKART MIT EINER NEIGBAREN LENKSÄULE
GO-KART COMPRISING A TILTING STEERING COLUMN

(30) Priorité: 29.11.2013 FR 1361895
(43) Date de publication de la demande: 05.10.2016
(73) Titulaire: Sodikart, 44220 Couëron (FR)
(72) Inventeur: MERIAN, Alain, F-44450 La Chapelle Basse Mer (FR)
(74) Mandataire: Vidon Brevets & Stratégie
(86) Numéro de dépôt international: PCT/EP2014/075849
(87) Numéro de publication internationale: WO 2015/078986

(56) Documents cités:
- WO-A1-2014/170449
- DE-U1- 8 528 941
- FR-A1- 2 856 371
- US-A- 4 407 166
- US-A- 4 495 834
- US-A- 5 251 713

## Description

### 1. Domaine de l'invention

Le domaine de l'invention est celui des véhicules de loisir utilisés par exemple sur pistes, et plus particulièrement celui des karts.

Les karts sont des véhicules motorisés exploités sur des pistes fermées, par opposition à des véhicules roulant sur route. Ces pistes sont extérieures (« outdoor ») ou couvertes (« indoor »). On peut distinguer deux catégories principales de karts : les karts de location et les karts de loisir-compétition.

Les premiers sont exploités par des professionnels qui les louent à des particuliers (location au ticket), ou à des entreprises dans le cadre de séminaires de motivation du personnel ou autres. Les seconds sont la plupart du temps la propriété de personnes privées, qui les utilisent pour leur loisir, en s'entraînant et en participant à des compétitions.

L'invention s'applique particulièrement aux karts de location, mais également aux karts de compétition et de loisir.

### 2. Art antérieur et ses inconvénients

Les karts ont la particularité de présenter une garde au sol particulièrement faible : le châssis, et donc le siège du pilote, sont placés à faible distance du sol. En outre, les karts sont des véhicules relativement compacts, dans lesquels l'espace entre le siège et le volant est réduit, de sorte que le pilote doit glisser la partie inférieure de son corps entre ces deux éléments pour pouvoir s'installer aux commandes du véhicule. Il en résulte qu'il est parfois peu aisé pour un utilisateur de prendre position dans le kart.

Cette problématique se présente tout particulièrement (mais pas seulement) dans le contexte des karts de locations, pour lesquels le public visé est très vaste, et n'est pas restreint aux seules personnes jeunes et sportives. Notamment, des karts de location biplaces ont été développés, permettant à quiconque, même non pilote, de faire un baptême de kart, aux côtés d'un pilote expérimenté. Ces baptêmes sont destinés à tous, et notamment aux seniors ou aux personnes à mobilité réduite. Si elles prennent goût à cette activité, il est également souhaitable que ces personnes puissent ensuite apprendre à piloter un kart, aux côtés d'un instructeur, pour devenir *in fine* des pilotes autonomes d'un kart monoplace.

Le document de brevet FR 2 856 371, sur lequel est basé le préambule de la revendication 1, décrit un tel kart biplace. Le document de brevet

WO2014170449 décrit un kart dans lequel le pédalier est réglable, pour s'adapter à la morphologie du pilote.

Il existe donc un besoin d'une nouvelle structure de kart monoplace ou biplace, qui permette une installation plus aisée d'un utilisateur.

### 3. Exposé de l'invention

L'invention répond à ce besoin en proposant un kart comprenant un châssis sur lequel est monté au moins un siège et un ensemble de direction comprenant une colonne de direction et portant au moins un volant.

Selon l'invention, l'ensemble de direction est mobile en rotation par rapport au châssis autour d'un axe sensiblement horizontal et perpendiculaire à l'axe longitudinal dudit kart, de façon à pouvoir prendre au moins deux positions :
- une position de roulage, dans laquelle l'ensemble de direction est placé de façon qu'un utilisateur puisse manipuler le volant, lorsqu'il est installé dans le ou un desdits sièges ; et
- une position d'installation, dans laquelle l'ensemble de direction est placé de façon à faciliter l'installation de l'utilisateur dans le ou un desdits sièges et dans laquelle ladite colonne de direction est sensiblement disposée entre des roues avant dudit kart.

Ainsi, l'invention repose sur une approche tout à fait nouvelle et inventive de la structure d'un kart monoplace ou biplace. En effet, l'invention propose de concevoir un ensemble de direction articulé facilitant l'installation du pilote ou du passager du kart. En se déplaçant vers la position d'installation, l'ensemble de direction, comprenant notamment la colonne de direction et le ou les volant(s), comme on le verra plus en détail dans la suite, libère un plus grand espace entre le volant et le siège, de sorte qu'il est plus aisé de prendre place à bord du kart, notamment pour les personnes à mobilité réduite. Lorsque le pilote et/ou le passager sont installés à bord du kart, l'ensemble de direction peut ensuite être aisément basculé à nouveau en position de roulage, dans laquelle le pilote a accès à toutes les commandes de pilotage.

Par « volant », on entend ici, et dans l'ensemble de ce document, tout organe de commande manuelle de l'orientation des roues directrices du kart. Un kart selon l'invention peut donc être équipé d'un volant, mais également d'un guidon, ou de tout autre organe de commande remplissant la même fonction.

Selon une première caractéristique de l'invention, dans la position d'installation, l'ensemble de direction est basculé vers l'avant du kart.

Ainsi, le volant s'écarte du siège, puisqu'il est entraîné par l'ensemble de direction vers l'avant du kart ; il y a donc plus d'espace libre devant le siège, dans lequel l'utilisateur peut se mouvoir pour prendre position dans le kart.

Selon une autre caractéristique de l'invention, l'ensemble de direction est mobile en rotation. De préférence, cette rotation se fait autour d'un axe sensiblement horizontal et perpendiculaire à l'axe longitudinal du kart. Ainsi, l'ensemble de direction peut aisément pivoter vers l'avant par rapport à cet axe. En outre, un tel axe est de préférence situé à l'arrière des roues avant du kart, de façon à ce qu'en position d'installation, la colonne de direction soit sensiblement disposée entre les roues avant du kart.

Selon l'invention, une partie inférieure de la colonne de direction est reliée aux roues avant du kart par l'intermédiaire de biellettes présentant en leur extrémité des rotules, et l'axe de rotation de l'ensemble de direction est sensiblement confondu avec un axe traversant lesdites rotules, ou en est à tout le moins très proche.

Ainsi, lors du basculement de l'ensemble de direction, les biellettes reliées aux roues avant par l'intermédiaire de fusées, se contentent de tourner sur elles-mêmes, sans déplacement excessif vers le haut ou vers le bas, vers l'avant ou vers l'arrière. Le basculement de la colonne de direction n'altère donc pas le réglage et le fonctionnement des pièces assurant la transmission aux roues avant du mouvement du volant, et ne modifie pas la cinématique des biellettes.

Selon un aspect de l'invention, ledit ensemble de direction comprend une colonne de direction et un support de direction comprenant au moins une tige de support, s'étendant sensiblement parallèlement à ladite colonne.

Le support de direction, et notamment la ou les tige(s) de support, permettent de renforcer la colonne de direction qui est un organe sensible du kart, lors des changements de position de cette dernière.

Selon une caractéristique particulière, ladite au moins une tige de support est formée d'au moins une partie inférieure et une partie supérieure, lesdites parties inférieure et supérieure formant un angle sensiblement compris entre 120° et 150°.

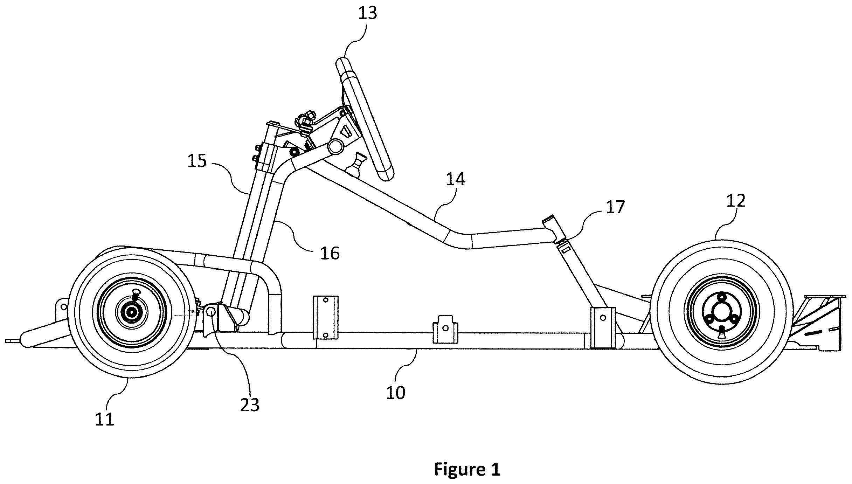

Ainsi, la tige de support est coudée, ce qui permet d'accroître l'espace libéré entre le volant et le siège lors du basculement vers l'avant de l'ensemble de direction, de la position de roulage vers la position d'installation. Dans un mode de réalisation particulier de l'invention illustré en figure 1, cet angle est de 128°.

Selon un autre aspect de l'invention, une partie supérieure dudit ensemble de direction est reliée par un bras de liaison à un point d'appui solidaire dudit châssis.

Ainsi, l'ensemble de direction présente plusieurs points d'appui par rapport au châssis, tout d'abord de part et d'autre du support de direction, sensiblement à l'avant du kart, et ensuite à la base du bras de liaison, vers l'arrière du kart, ce qui contribue à la stabilité de la colonne de direction, dans chacune de ses deux positions d'installation et de roulage.

Selon une caractéristique avantageuse, ce bras de liaison est constitué d'au moins deux éléments mobiles l'un par rapport à l'autre, de façon que la longueur du bras varie lors du passage de la position de roulage à la position d'installation, et réciproquement.

Ces deux éléments mobiles peuvent notamment coulisser l'un à côté de l'autre, ou encore l'un dans l'autre, de façon à former un bras de liaison télescopique. Ainsi, le bras de liaison s'allonge lorsque l'ensemble de direction bascule vers l'avant du kart en position d'installation. Le bras se rétracte ensuite lorsque l'ensemble de direction revient en position de roulage. De cette façon, l'ensemble de direction reste solidarisé au châssis en toute position, mais peut pivoter par rapport à ce dernier. En réduisant ainsi les degrés de liberté de l'ensemble de direction par rapport au châssis, on évite tout déplacement latéral intempestif au cours du changement de position de l'ensemble de direction, qui serait susceptible d'endommager la colonne de direction, et donc le fonctionnement du kart.

Selon une caractéristique particulière, un tel kart comprend des moyens de verrouillage de la longueur du bras, au moins dans la position de roulage.

De tels moyens de verrouillage peuvent comprendre une vis empêchant tout mouvement relatif des deux éléments mobiles l'un par rapport à l'autre, ou un système à base de goupille coopérant avec des orifices correspondants ménagés dans les deux éléments mobiles pour les immobiliser l'un par rapport à l'autre.

De cette façon, on est assuré que la colonne de direction reste en position de roulage pendant que le kart circule sur la piste, et on évite tout basculement intempestif et indésirable de l'ensemble de direction en position d'installation.

Selon un mode de réalisation particulier de l'invention, un tel kart comprend deux sièges.

En effet, l'invention s'applique tout particulièrement aux karts biplaces, dans lesquels le passager peut être un senior ou une personne à mobilité réduite, dont il faut faciliter l'installation dans le kart, pour lui permettre l'accès à ce loisir.

Selon un aspect particulier de ce mode de réalisation, les sièges sont placés l'un à côté de l'autre, le bras s'étendant sensiblement au milieu du kart, entre lesdits sièges.

Ainsi, l'installation de chacun des deux passagers est facilitée, de part et d'autre du kart, grâce à la position centrale de la colonne de direction.

Selon un autre aspect particulier de ce mode de réalisation, la colonne de direction porte deux volants ou guidons.

Il est ainsi possible pour chacun des deux utilisateurs du kart de le piloter. Ceci est particulièrement avantageux lorsque le kart biplace est utilisé pour la formation d'un pilote, dans la mesure où le pilote instructeur et l'élève en apprentissage peuvent tous deux avoir accès aux commandes. En outre, dans ce contexte, le kart biplace est particulièrement modulaire, puisque le pilote peut choisir de quel côté du kart il souhaite s'asseoir pour pouvoir le piloter, un volant étant à disposition pour chacun des deux sièges.

A titre alternatif, selon un aspect de l'invention, un tel kart biplace peut comprendre un unique volant ou guidon, utilisé par le pilote; devant l'autre siège, destiné à un passager non pilote, le volant peut être remplacé par une ou plusieurs poignées, ou une barre de maintien, permettant au passage de se tenir. Cette barre ou poignée(s) peut ainsi être utilisée par le passager lors de son installation dans le kart, ou lors de sa sortie du kart, pour faciliter son déplacement en l'accompagnant d'une traction sur cette barre ou poignée. Dans ce cas, il est préférable que l'ensemble de direction puisse être verrouillé en position d'installation, pour éviter qu'une telle traction ne le ramène en position de roulage pendant la phase d'entrée ou de sortie du passager dans le kart. Cette barre ou poignée(s) peut également être utilisée quand le kart est en circulation sur la piste, pour aider le passage à se maintenir en position dans son siège, notamment dans les virages.

Selon une caractéristique avantageuse, un tel kart comprend des moyens de désactivation de l'un desdits volants.

Ainsi, lorsque le kart biplace est utilisé pour une démonstration ou un baptême de kart, seul le pilote a accès aux commandes, le passager étant assis du côté où le volant est désactivé : il n'existe donc pas de risque que le passager inexpérimenté vienne perturber la conduite du kart.

Selon une autre caractéristique de l'invention, chacun desdits volants est relié à une partie supérieure de ladite colonne de direction par une biellette, au moins une desdites biellettes pouvant être désactivée.

Lorsqu'une biellette est désactivée, le volant auquel elle est associée se trouve donc également désactivé. La biellette peut être par exemple démontée, ou bloquée en mouvement.

Selon un autre aspect de l'invention, le ou les volants sont montés réglables en inclinaison sur un moyeu de volant s'étendant horizontalement à partir de la partie supérieure de ladite tige de support.

La position du volant peut ainsi être ajustée pour s'adapter à la morphologie et à la taille du pilote.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- la figure 1 illustre un kart selon l'invention, dans lequel l'ensemble de direction est en position de roulage ;
- la figure 2 présente le kart de la figure 1, lorsque l'ensemble de direction est en position d'installation;
- la figure 3 offre une vue en perspective de la structure de l'ensemble de direction d'un kart biplace en position de roulage dans un mode de réalisation de l'invention ;
- la figure 4 offre une vue en perspective de l'ensemble de direction de la figure 3 en position d'installation.

### 5. Description détaillée de modes de réalisation de l'invention

Le principe général de l'invention repose sur un ensemble de direction basculant, permettant d'éloigner le volant du siège d'un kart lorsqu'un utilisateur souhaite prendre place à bord du véhicule, de façon à faciliter son installation. En basculant vers une position d'installation, l'ensemble de direction libère en effet un espace plus vaste devant le siège, ce qui permet à un utilisateur de glisser plus facilement ses membres inférieurs en position de pilotage. Il est ensuite particulièrement aisé de refaire basculer l'ensemble de direction dans sa position initiale de roulage.

Bien que cette technique soit particulièrement utile pour des karts biplaces, elle s'applique également aux karts monoplaces, qu'il s'agisse de karts de loisirs ou de compétition.

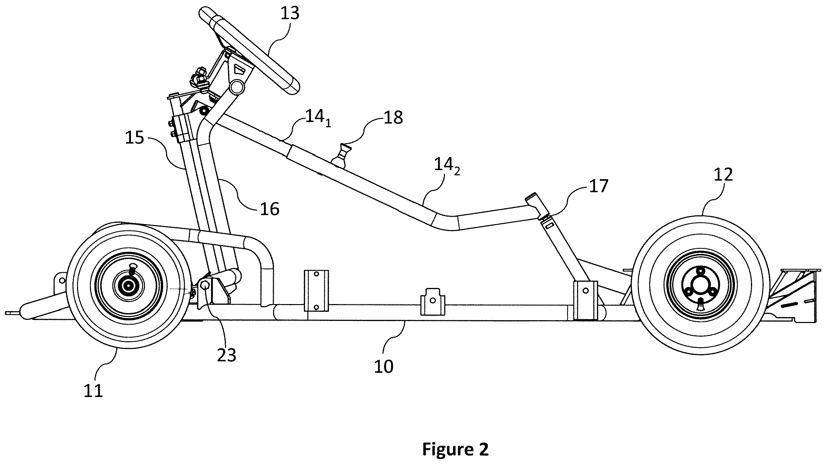

On présente désormais, en relation avec la **figure 1****,** une vue de côté d'un kart selon un mode de réalisation de l'invention, dans lequel l'ensemble de direction est en position de roulage. Les caractéristiques décrites ci-après en relation avec les **figures 1** **et** **2** peuvent s'appliquer à un kart monoplace ou à un kart biplace.

Un tel kart comprend un châssis 10, des roues avant 11 et arrière 12, et un volant 13, fixé à un ensemble de direction. Un tel ensemble de direction comprend notamment une colonne de direction 15, et un support de direction 16. La colonne de direction 15 est par ailleurs reliée, en sa partie supérieure, à un bras de liaison 14, lui-même relié au châssis 10 en un point d'appui 17.

Sur la **figure 1****,** l'ensemble de direction est en position de roulage, i.e. dans la position dans laquelle le kart circule, piloté par un pilote assis dans un siège qui n'a pas été représenté par souci de simplification. Le siège est classiquement fixé au châssis 10, et peut être réglable. Dans cette position de roulage, la colonne de direction 15 forme donc un angle d'environ 80° avec le plan du châssis 10. Plus précisément, dans le mode de réalisation particulier de la figure 1, cet angle est de 82°.

Sur la **figure 2****,** ce même ensemble de direction 15, 16 est en position d'installation, i.e. dans une position facilitant l'installation d'un utilisateur du kart dans le siège. Dans cette position, l'ensemble de direction 15, 16 et le volant 13 basculent vers l'avant du kart, s'éloignant ainsi du siège (non représenté), ménageant un espace plus important pour que l'utilisateur puisse glisser ses membres inférieurs derrière les commandes de pilotage. Dans cette position d'installation, la colonne de direction 15 forme désormais un angle obtus d'environ 110° avec le plan du châssis 10.

Dans ce mode de réalisation, pour passer de la position de roulage de la **figure 1** à la position d'installation de la **figure 2****,** l'ensemble de direction 15, 16 a pivoté autour de l'axe de rotation 23, sensiblement parallèle au plan du châssis 10, et sensiblement perpendiculaire à l'axe longitudinal du kart (i.e. à l'axe s'étendant de l'avant vers l'arrière du kart).

Pour accompagner cette rotation, le bras de liaison 14 s'allonge : dans le mode de réalisation de la **figure 2****,** ce bras de liaison 14 est formé de deux éléments 14₁ et 14₂ coulissant l'un par rapport à l'autre ; en l'espèce, l'élément 14₁ est solidarisé par l'une de ses extrémités au support de direction 16, par l'intermédiaire d'un élément de fixation non référencé, et coulisse, par son autre extrémité, dans le tube creux 14₂. Le bras de liaison 14 est ainsi un bras télescopique.

Dans le cas particulier d'un kart biplace, un tel bras de liaison est de préférence disposé entre les deux sièges du kart, pour empêcher que ce bras ne gêne l'installation des usagers. Dans le cas d'un kart monoplace, un tel bras de liaison est de préférence disposé sur le côté du kart opposé au côté par lequel s'installe le pilote.

Un mécanisme de verrouillage 18 permet de bloquer la position relative des deux éléments mobiles 14₁ et 14₂ du bras de liaison 14 l'un par rapport à l'autre. Un tel verrouillage peut s'opérer en toute position de l'ensemble de direction (position d'installation, position de roulage, position intermédiaire entre la position d'installation et la position de roulage, etc.), mais est particulièrement utile lorsque ce dernier est en position de roulage, pour empêcher tout basculement intempestif de l'ensemble de direction vers l'avant, lorsque le kart est en circulation sur la piste.

Un tel mécanisme de verrouillage 18 peut consister en une vis qui, au travers d'un orifice ménagé dans l'élément mobile 14₂, vient serrer l'élément mobile 14₁ pour empêcher tout coulissement des deux éléments mobiles 14₁ et 14₂ l'un par rapport à l'autre. A titre alternatif, les éléments mobiles 14₁ et 14₂ peuvent prendre l'un par rapport à l'autre un ensemble de positions discrètes, que l'on verrouille au moyen d'une goupille traversant deux orifices en vis-à-vis ménagés dans chacune des pièces 14₁ et 14₂.

D'autres modes de réalisation d'un ensemble de direction articulé pourraient bien sûr également être envisagés, dans lesquels l'ensemble de direction n'aurait pas un mouvement de rotation lors de son changement de position, mais éventuellement un mouvement de basculement plus complexe, ou un mouvement articulé combinant différents mouvements de translation selon des directions différentes, ou combinant une ou plusieurs translations et une ou plusieurs rotations.

Notamment, en position d'installation, l'ensemble de direction pourrait ne pas basculer vers l'avant du kart, mais par exemple sur le côté du kart opposé au côté par lequel l'utilisateur vient prendre position dans le siège.

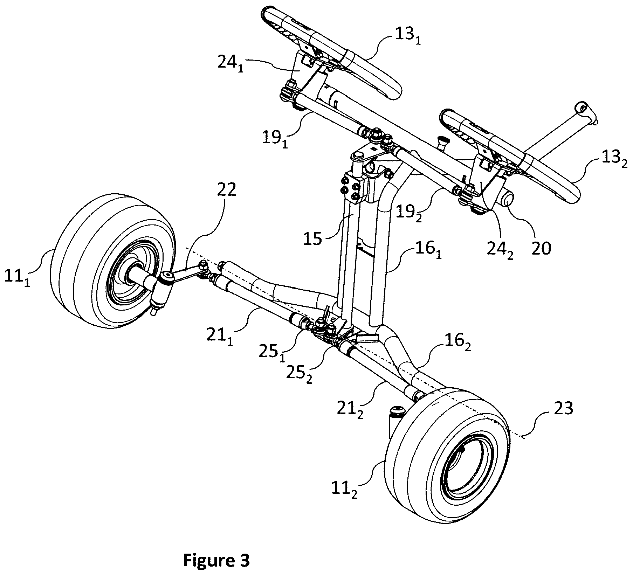

La **figure 3** présente une vue en perspective d'un ensemble de direction selon un mode de réalisation de l'invention, pour un kart biplace.

Un tel kart comprend donc deux volants référencés 13₁ et 13₂, qui sont reliés à la partie supérieure de la colonne de direction 15 par l'intermédiaire de biellettes référencées 19₁ et 19₂. La partie inférieure de la colonne de direction 15 est quant à elle reliée aux roues 11₁ et 11₂ par l'intermédiaire de biellettes 21₁ et 21₂ et de fusées 22, dont seule une est visible sur la **figure 3****.** Lorsqu'un pilote tourne l'un des volants, le mouvement de rotation du volant est transmis, par l'intermédiaire des biellettes 19, 21 et de la colonne de direction 15, jusqu'aux fusées 22, et entraîne la rotation des roues avant 11₁ et 11₂.

Lorsque le kart biplace est utilisé pour une démonstration ou un baptême de kart, il n'est pas utile que les deux volants puissent être actionnés, et il est même au contraire souhaitable de pouvoir désactiver l'un des volants, afin d'empêcher que le passager inexpérimenté du kart ne vienne perturber la conduite du pilote, par un mouvement intempestif du volant.

Pour ce faire, il est donc possible de désactiver l'une des deux biellettes, par exemple simplement en la désolidarisant de la colonne de direction 15. Le pilote peut choisir s'il préfère s'asseoir à droite ou à gauche du kart biplace, et l'on désactive alors la biellette 19 située côté passager. Il est également possible de désactiver l'une des biellettes 19 en désolidarisant l'un des volants 13₁ ou 13₂ des pièces d'entraînement des biellettes 24₁ et 24₂.

Alternativement, lorsque le kart biplace est utilisé pour la formation d'un pilote, il peut être souhaitable que les deux volants puissent être utilisés, l'un pour l'élève-pilote, qui conduit le kart, et l'autre pour le pilote-instructeur qui souhaiterait rectifier une trajectoire erronée empruntée par l'élève-pilote par exemple.

L'inclinaison des volants 13₁, 13₂ peut en outre être ajustée, de façon à s'adapter à la morphologie du ou des pilote(s). Pour ce faire, les volants 13₁, 13₂ sont montés, par liaison pivot, sur un moyeu de volant 20.

Ce moyeu de volant 20 fait ici partie de l'ensemble de direction, et est vissé à la partie supérieure des deux tiges de support de direction 16₁, disposées de part et d'autre de la colonne de direction, et s'étend sensiblement horizontalement, depuis ces deux tiges de support, de part et d'autre de ces dernières. Ces deux tiges de support de direction 16₁ s'étendent sensiblement parallèlement à la colonne de direction 15 dans leur partie inférieure, et sont coudées dans leur partie supérieure : cette forme particulière coudée permet d'accroître l'espace dégagé lors du basculement de la colonne de direction en position d'installation.

En leur partie inférieure, les tiges de support 16₁ sont reliées par soudure à une pièce tubulaire en forme de V (ou en forme de guidon de vélo) référencée 16₂ qui fait également partie du support de direction 16. Les extrémités de cette pièce 16₂ en forme de V sont sensiblement rectilignes, et reliées au châssis (non représenté) par une liaison pivot.

L'axe passant par les deux points de fixation de cette pièce en forme de V 16₂ au châssis 10 (non représenté) définit l'axe 23 de rotation de l'ensemble de direction par rapport au châssis, lors de son passage de la position de roulage à la position d'installation, et inversement.

On notera que cet axe de rotation 23 est très proche d'un axe passant par les rotules 25₁, 25₂, situées aux extrémités des biellettes 21₁ et 21₂ et manoeuvrant ces dernières lors de l'actionnement du volant. La proximité de ces deux axes permet d'éviter toute modification de la cinématique des biellettes de direction 21₁, 21₂ lors du basculement de la colonne de direction de la position de roulage à la position d'installation. Dans un mode de réalisation de l'invention, l'axe de rotation 23 de l'ensemble de direction traverse les rotules 25₁, 25₂, situées aux extrémités des biellettes 21₁ et 21₂.

Ainsi, lorsque la colonne de direction bascule de la position de roulage à la position d'installation, et inversement, les biellettes de direction 21₁ et 21₂ ne subissent aucun déplacement vers le haut ou vers le bas, et se contentent quasiment de tourner sur elles-mêmes.

Le basculement de la colonne de direction n'a donc aucun impact sur le réglage des biellettes de direction et des fusées, et n'est pas susceptible d'en altérer le bon fonctionnement.

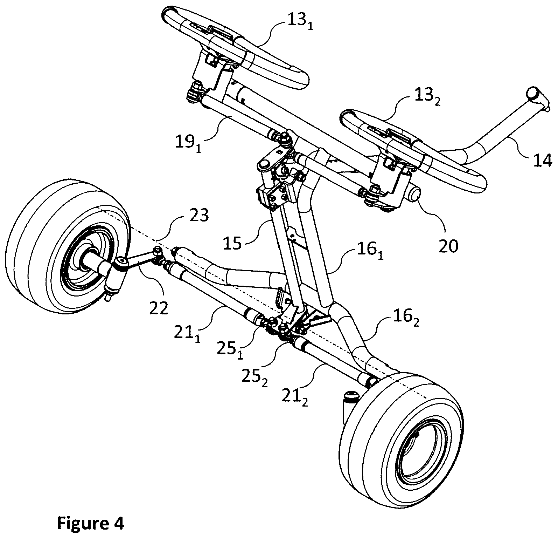

La **figure 4** présente une vue en perspective de l'ensemble de direction de la **figure 3** en position d'installation, i.e. basculé vers l'avant pour faciliter l'installation du pilote et du passager à bord du kart biplace. Comme on peut le constater sur cette **figure 4****,** l'ensemble de direction comprenant la colonne de direction 15, le support de direction formé de la pièce en « V » 16₂ et des tiges de support 16₁, ainsi que le moyeu de volant 20 et les deux volants 13₁ et 13₂ ont pivoté autour de l'axe de rotation 23 vers l'avant du kart biplace. Le bras de liaison 14 s'est quant à lui allongé pour accompagner cette rotation.

Lorsque le pilote et/ou le passager est installé, il lui/leur suffit d'opérer une traction sur l'ensemble de direction pour le refaire basculer en position de roulage, et de le verrouiller dans cette position.

## Revendications

1. Kart comprenant un châssis (10) sur lequel est monté au moins un siège et un ensemble de direction (15, 16) comprenant une colonne de direction (15) et portant au moins un volant (13),
**caractérisé en ce que** ledit ensemble de direction est mobile en rotation par rapport audit châssis autour d'un axe sensiblement horizontal et perpendiculaire à l'axe longitudinal du kart, de façon à pouvoir prendre au moins deux positions :
- une position de roulage, dans laquelle ledit ensemble de direction est placé de façon qu'un utilisateur puisse manipuler le volant, lorsqu'il est installé dans le ou un desdits sièges ; et
- une position d'installation, dans laquelle ledit ensemble de direction est placé de façon à faciliter l'installation dudit utilisateur dans le ou un desdits sièges, et dans laquelle ladite colonne de direction est basculée vers l'avant du kart par rapport à dudit axe;
et **en ce qu'**une partie inférieure de ladite colonne de direction (15) est reliée auxdites roues avant (11₁, 11₂) du kart par l'intermédiaire de biellettes (21₁, 21₂) présentant en leur extrémité des rotules (25₁, 25₂), et **en ce que** l'axe de rotation dudit ensemble de direction est sensiblement confondu avec un axe traversant lesdites rotules.

2. Kart selon l'une quelconque des revendications 1, **caractérisé en ce que** ledit ensemble de direction comprend également un support de direction (16) comprenant au moins une tige de support, s'étendant sensiblement parallèlement à ladite colonne de direction (15).

3. Kart selon la revendication 2, **caractérisé en ce que** ladite au moins une tige de support est formée d'au moins une partie inférieure et une partie supérieure, lesdites parties inférieure et supérieure formant un angle sensiblement compris entre 120° et 150°.

4. Kart selon l'une quelconque des revendications 1 à 3, **caractérisé en ce qu'**une partie supérieure dudit ensemble de direction est reliée par un bras de liaison (14) à un point d'appui (17) solidaire dudit châssis.

5. Kart selon la revendication 4, **caractérisé en ce que** ledit bras de liaison est constitué d'au moins deux éléments (14₁, 14₂) mobiles l'un par rapport à l'autre, de façon que la longueur dudit bras varie lors du passage de ladite position de roulage à ladite position d'installation, et réciproquement.

6. Kart selon la revendication 5, **caractérisé en ce qu'**il comprend des moyens de verrouillage (18) de la longueur dudit bras, au moins dans ladite position de roulage.

7. Kart selon l'une quelconque des revendications 1 à 6, **caractérisé en ce qu'**il comprend deux sièges.

8. Kart selon les revendications 5 et 7, **caractérisé en ce que** lesdits sièges sont placés l'un à côté de l'autre, ledit bras s'étendant sensiblement au milieu du kart, entre lesdits sièges.

9. Kart selon l'une quelconque des revendications 7 et 8, **caractérisé en ce que** ledit ensemble de direction porte deux volants (13₁, 13₂) ou guidons.

10. Kart selon la revendication 8, **caractérisé en ce qu'**il comprend des moyens de désactivation de l'un desdits volants.

11. Kart selon l'une quelconque des revendications 9 et 10, **caractérisé en ce que** chacun desdits volants est relié à une partie supérieure de ladite colonne de direction par une biellette (19₁, 19₂), au moins une desdites biellettes pouvant être désactivée.

12. Kart selon l'une quelconque des revendications 1 à 11, **caractérisé en ce que** le ou les volants sont montés réglables en inclinaison sur un moyeu de volant (20) s'étendant horizontalement à partir de la partie supérieure de ladite tige de support.

## Patentansprüche

1. Gokart, umfassend ein Fahrgestell (10), auf dem mindestens ein Sitz und eine Lenkanordnung (15, 16) angeordnet sind, die eine Lenksäule (15) aufweist und mindestens ein Lenkrad (13) trägt,
**dadurch gekennzeichnet, dass** die Lenkanordnung in Bezug auf das Fahrgestell um eine Achse, die im Wesentlichen horizontal und senkrecht zu der Längsachse des Gokarts ist, derart drehbeweglich ist, um mindestens zwei Positionen einnehmen zu können:
- eine Fahrposition, in der die Lenkanordnung derart positioniert ist, dass ein Benutzer das Lenkrad handhaben kann, wenn er sich auf dem oder einem der Sitze niedergelassen hat, und
- eine Niederlassungsposition, in der die Lenkanordnung derart positioniert ist, um das Niederlassen des Benutzers auf dem oder einem der Sitze zu erleichtern und in der die Lenksäule zum Vorderteil des Gokarts in Bezug auf die Achse geneigt ist;
und dadurch, dass ein unterer Teil der Lenksäule (15) mit den Vorderrädern (11₁, 11₂) des Gokarts über Schubstangen (21₁, 21₂) verbunden ist, die an ihrem Ende Kugelgelenke (25₁, 25₂) aufweisen, und, dass die Drehachse der Lenkanordnung im Wesentlichen mit einer Achse, die durch die Kugelgelenke läuft, zusammenfällt.

2. Gokart nach einem der Ansprüche 1, **dadurch gekennzeichnet, dass** die Lenkanordnung ebenfalls eine Lenkstütze (16) aufweist, die mindestens eine Stützstange aufweist, die sich im Wesentlichen parallel zu der Lenksäule (15) erstreckt.

3. Gokart nach Anspruch 2, **dadurch gekennzeichnet, dass** die mindestens eine Stützstange aus mindestens einem unteren Teil und einem oberen Teil gebildet ist, wobei der untere und obere Teil einen Winkel bilden, der im Wesentlichen zwischen 120° und 150° beträgt.

4. Gokart nach einem der Ansprüche 1 bis 3, **dadurch gekennzeichnet, dass** ein oberer Teil der Lenkanordnung durch einen Verbindungsarm (14) mit einem Auflagepunkt (17) verbunden ist, der mit dem Fahrgestell fest verbunden ist.

5. Gokart nach Anspruch 4, **dadurch gekennzeichnet, dass** der Verbindungsarm aus mindestens zwei Elementen (14₁, 14₂) gebildet ist, die relativ zueinander beweglich sind, derart, dass die Länge des Arms beim Übergang von der Fahrposition in die Niederlassungsposition und umgekehrt variiert.

6. Gokart nach Anspruch 5, **dadurch gekennzeichnet, dass** er Verriegelungsmittel (18) der Länge des Arms mindestens in der Fahrposition aufweist.

7. Gokart nach einem der Ansprüche 1 bis 6, **dadurch gekennzeichnet, dass** er zwei Sitze aufweist.

8. Gokart nach einem der Ansprüche 5 und 7, **dadurch gekennzeichnet, dass** die Sitze nebeneinander angeordnet sind, wobei sich der Arm im Wesentlichen in der Mitte des Gokarts zwischen den Sitzen erstreckt.

9. Gokart nach einem der Ansprüche 7 und 8, **dadurch gekennzeichnet, dass** die Lenkanordnung zwei Lenkräder (13₁, 13₂) oder Lenkstangen trägt.

10. Gokart nach Anspruch 8, **dadurch gekennzeichnet, dass** er Mittel zum Deaktivieren von einem der Lenkräder aufweist.

11. Gokart nach einem der Ansprüche 9 und 10, **dadurch gekennzeichnet, dass** jedes der Lenkräder mit einem oberen Teil der Lenksäule durch eine Schubstange (19₁, 19₂) verbunden ist, wobei mindestens eine der Schubstangen deaktiviert werden kann.

12. Gokart nach einem der Ansprüche 1 bis 11, **dadurch gekennzeichnet, dass** das oder die Lenkräder in Neigung verstellbar auf einer Lenkradnabe (20) montiert sind, die sich horizontal ausgehend von dem oberen Teil der Stützstange erstreckt.

## Claims

1. Go-kart comprising a chassis (10) on which is mounted at least one seat and a steering assembly (15, 16) comprising a steering column (15) and carrying at least one steering wheel (13), **characterised in that** the said steering assembly is rotationally moveable with respect to the said chassis about an axis substantially horizontal and perpendicular to the longitudinal axis of the go-kart, so as to be able to adopt at least two positions:
- a rolling position, in which the said steering assembly is positioned so that a user can manipulate the steering wheel when he/she is sitting in the seat or one of the said seats; and
- an installation position, in which the said steering assembly is positioned so as to facilitate the user sitting in the or one of the said seats, and in which the said steering column is tilted towards the front of the go-kart with respect to the said axis, and **in that** a lower part of the said steering column (15) is connected to the said front wheels (11₁, 11₂) of the go-kart by means of links (21₁, 21₂) having at their end ball joints (25₁, 25₂), and **in that** the axis of rotation of the said steering assembly is substantially co-incident with an axis passing through the said ball joints.

2. Go-kart according to Claim 1, **characterised in that** the said steering assembly also comprises a steering bracket (16) comprising at least one supporting rod extending substantially parallel to the said steering column (15).

3. Go-kart according to Claim 2, **characterised in that** the said at least one supporting rod is formed from at least a lower part and an upper part, the said lower and upper parts forming an angle substantially between 120° and 150°.

4. Go-kart according to any one of Claims 1 to 3, **characterised in that** an upper part of the said steering assembly is connected by a connecting arm (14) to a support point (17) integral with the said chassis.

5. Go-kart according to Claim 4, **characterised in that** the said connecting arm consists of at least two elements (14₁, 14₂) moveable with respect to one another, so that the length of the said arm varies during the change from the said rolling position to the said installation position, and vice versa.

6. Go-kart according to Claim 5, **characterised in that** it comprises means (18) for fixing the length of the said arm, at least in the said rolling position.

7. Go-kart according to any one of Claims 1 to 6, **characterised in that** it comprises two seats.

8. Go-kart according to Claims 5 and 7, **characterised in that** the said seats are placed next to one another, the said arm extending substantially in the middle of the gokart, between the said seats.

9. Go-kart according to either one of Claims 7 and 8, **characterised in that** the said steering assembly carries two steering wheels (13₁, 13₂) or handlebars.

10. Go-kart according to Claim 8, **characterised in that** it comprises means for disabling one of the said steering wheels.

11. Go-kart according to either one of Claims 9 and 10, **characterised in that** each of the said steering wheels is connected to an upper part of the said steering column by a connecting rod (19₁, 19₂), at least one of the said connecting rods being able to be disabled.

12. Go-kart according to any one of Claims 1 and 11, **characterised in that** the steering wheel or wheels are mounted in an inclination adjustable manner on a steering wheel hub (20) extending horizontally from the upper part of the said supporting rod.
